# EUROPÄISCHE PATENTSCHRIFT

(11) **EP 3 377 545 B1**
(45) Veröffentlichungstag und Bekanntmachung des Hinweises auf die Patenterteilung: **08.12.2021**
(21) Anmeldenummer: 16801971.9
(22) Anmeldetag: 27.10.2016
(51) Int. Cl.: C08F 220/44, C08F 2/38, D01F 6/38

(54) **VERFAHREN ZUR HERSTELLUNG VON THERMISCH STABILEN SCHMELZSPINNBAREN PAN-COPOLYMEREN, PAN-COPOLYMERE, HIERAUS GEBILDETE FORMKÖRPER SOWIE VERFAHREN ZUR HERSTELLUNG DIESER FORMKÖRPER**
METHOD FOR PRODUCING THERMALLY STABLE MELT-SPINNABLE PAN COPOLYMERS, PAN COPOLYMERS, MOLDED BODIES MADE THEREOF, AND A METHOD FOR PRODUCING SAID MOLDED BODIES
PROCÉDÉ POUR PRODUIRE DES COPOLYMÈRES DE PAN STABLES OBTENUS PAR FILAGE À CHAUD, COPOLYMÈRES DE PAN, CORPS MOULÉS FORMÉS À PARTIR DE CEUX-CI ET PROCÉDÉ POUR PRODUIRE CES CORPS MOULÉS

(30) Priorität: 16.11.2015 DE 102015222585
(43) Veröffentlichungstag der Anmeldung: 26.09.2018
(73) Patentinhaber: Fraunhofer Gesellschaft zur Förderung der angewandten Forschung E.V., 80686 München (DE)
(72) Erfinder: KNOOP, Mats Timothy, 21244 Buchholz in der Nordheide (DE); LIESKE, Antje, 14480 Potsdam (DE); HAHN, Mathias, 14552 Michendorf (DE)
(74) Vertreter: Pfenning, Meinig & Partner mbB
(86) Internationale Anmeldenummer: PCT/EP2016/075950
(87) Internationale Veröffentlichungsnummer: WO 2017/084853

(56) Entgegenhaltungen:
- GB-A- 663 268
- US-A- 5 618 901

## Beschreibung

Die vorliegende Erfindung betrifft einen neuen Synthese-Prozess, um schmelzbare PAN-Copolymere mit erhöhter thermischer Stabilität herzustellen. Die gemäß dem erfindungsgemäßen Verfahren hergestellten PAN-Copolymere zeigen überraschenderweise verbesserte thermische und mechanische Eigenschaften, verglichen mit gemäß aus dem Stand der Technik bekannten Methoden hergestellten PAN-Copolymeren. Zudem betrifft die vorliegende Erfindung entsprechende PAN-Copolymere sowie hieraus hergestellte Formkörper bzw. ein Herstellungsverfahren zur Herstellung derartiger Formkörper, insbesondere schmelzgesponnener Mono- oder Multifilamente.

Carbonfasern werden gemäß Stand der Technik hergestellt durch thermische Konvertierung von separat hergestellten Precursor-Fasern. Materialien für die Precursor-Fasern sind vor allem PAN-(Co)Polymere (Acryl-Precursor) sowie Pech. Acryl-Precursorfasern werden kommerziell bisher ausschließlich über Nass- bzw. Trockenspinnverfahren hergestellt. Dazu wird eine Lösung der Polymere mit Konzentrationen ≤ 20% entweder in ein Koagulationsbad oder eine heiße Dampfatmosphäre gesponnen, wobei das Lösungsmittel aus der Faser diffundiert. Auf diese Weise werden qualitativ hochwertige Precursoren erzeugt, die Kosten der Verfahren sind jedoch vergleichsweise hoch. Dies resultiert einerseits aus den benötigten Lösemitteln und deren Handling, andererseits aus dem relativ geringen Durchsatz von Lösungsspinnverfahren.

Aufgrund der starken inter- und intramolekularen Wechselwirkungen der Nitrilgruppen liegt der Schmelzpunkt von PAN mit 320°C oberhalb der Zersetzungstemperatur des Polymers. Dies bedeutet, dass ein Schmelzspinnen von reinem PAN nicht möglich ist, das Polymer verhält sich nicht wie ein Thermoplast sondern wie ein Duroplast. Gleichzeitig würde jedoch die Möglichkeit zur Herstellung von Precursorfasern mittels Schmelzspinnen eine deutliche Kostenersparnis in der Precursorherstellung bedeuten, da der Durchsatz beim Schmelzspinnen wesentlich höher ist und zudem keine Lösungsmittel anfallen, die Kosten für Beschaffung und Recycling/Entsorgung verursachen.

Seit mehreren Jahrzehnten gibt es daher Bestrebungen, PAN der Verarbeitung mittels Schmelzspinnen zugänglich zu machen. Prinzipiell zu unterscheiden sind dabei Ansätze über eine äußere Weichmachung (Mischung des Polymers mit Zusätzen) und über eine innere Weichmachung (Copolymerisation). In beiden Fällen wird dabei die Wechselwirkung der Nitrilgruppen gestört, so dass das Schmelzen unterhalb der Zersetzungstemperatur des Polymers erfolgt.

### Äußere Weichmachung:

US 2012/0027944 A1 beschreibt den Einsatz ionischer Flüssigkeiten in Masseverhältnissen von 1:1 bis 1:0,25 zur äußeren Weichmachung von PAN-Homopolymeren. US 2007/0270529 A1 beschreibt das Blending von PAN mit aromatischen technischen Thermoplasten unter Zusatz von Kompatibilisatoren und thermischen Stabilisatoren. In beiden Fällen enthält das Polymer nach dem Schmelzspinnen die äußeren Weichmacher weiterhin, so dass eine qualitativ geringerwertige Precursorfaser und eine Absenkung der Kohlenstoffausbeute bei der Carbonisierung unausweichlich sind. Verschiedene Patente (beispielsweise EP 0406709 A2; US 4,238,442; US 4,163,770) beschreiben den Einsatz von Wasser als äußeren Weichmacher, entweder allein oder in Kombination mit anderen Lösemitteln wie Nitroalkanen, Glykolen etc. Zur Verarbeitung derartiger weichgemachter PANs mittels Schmelzspinnen ist eine spezielle Schmelzspinnapparatur erforderlich, bei der die Faser in eine Druckzone gesponnen wird, um zunächst eine Faserformierung zu ermöglichen; bei der anschließenden Entspannung verdampft das Wasser kontrolliert. Aufgrund der apparativen Erfordernisse ist dieses Verfahren nur mit erheblichem Aufwand umsetzbar, zudem führt das verdampfende Wasser bzw. Lösungsmittel unweigerlich zu porösen Faserstrukturen, da Anteile von mindestens 30% äußerem Weichmacher erforderlich sind. GB 663268 beschreibt Verfahren zur Herstellung von PAN-Copolymeren durch radikalische Copolymerisation mindestens eines Acrylnitril-Monomers und mindestens eines radikalisch polymerisierbaren Comonomeren.

### Innere Weichmachung:

Eine innere Weichmachung wird durch die Copolymerisation mit geeigneten Comonomeren erreicht. Bereits 1970 wurde in GB1270504 die Herstellung thermoplastischer Acrylnitril-Copolymere für eine Faserherstellung mittels Schmelzspinnen beschrieben. Dabei werden 8-50 Gew.-% aliphatischer/ alicyclischer Alkene und/oder Acrylate und 0,2-10 Gew.-% sulfonsäuregruppen-haltiger Monomere als Comonomere genannt. Als Anwendungsbereich werden Textilfasern adressiert. In den Anwendungsbeispielen sind Methyl-, Ethyl-, Butylacrylat, Isobuten, Vinylacetat und Propen als Comonomere aufgeführt; die Spinntemperatur an der Düse lag bei 200 bis 240°C. Solche säuregruppenhaltigen Copolymere sind jedoch nicht für ein kontinuierliches Schmelzspinnverfahren geeignet, da die Schmelzviskosität nicht stabil ist sondern im Laufe der Zeit aufgrund der durch die säuregruppenkatalysierte Cyclisierungsreaktion der Nitrilgruppen unweigerlich zunimmt. In US3499073 wird die Herstellung von thermoplastischen PAN-Copolymeren mit Hilfe eines Organometall-Katalysators beschrieben. Die Polymere - auch Homopolymere des PAN - konnten bei Temperaturen von 250°C bis 295°C zu Monofilamenten verarbeitet werden. GB1294044 beschreibt Acrylnitrilcopolymere, die 60-70% Acrylnitril, 25-30% Methacrylnitril und 5-10% Acrylate oder Methacrylate enthalten und Erweichungspunkte zwischen 125°C und 175°C aufweisen. Am beschriebenen Erweichungspunkt liegt das Polymer jedoch nicht als Schmelze sondern als flexibilisierter Film vor. In US4107252 werden Copolymere des Acrylnitril mit 12-18wt% Styrol und 13-18wt% Isobuten vorgestellt, die Schmelztemperaturen zwischen 175°C und 260°C aufweisen. Die Comonomergehalte sind jedoch viel zu hoch, um aus solchen Copolymeren Carbonfasern herstellen zu können. Allgemein wird davon ausgegangen, dass ein für Carbonfasern geeignetes PAN-Copolymer eine durchschnittliche Kettenlänge von ≥9 aufeinanderfolgender Acrylnitrileinheiten enthalten muss. Es können also realistischerweise nur ca. 10mol% Comonomergehalt toleriert werden. In EP0030666 werden thermoplastische Acrylnitrilcopolymere mit bis zu 96% Acrylnitrilgehalt für Schläuche und Folien beschrieben, die durch Pfropfung von Acrylnitril auf eine Elastomerphase entstehen. Solche Polymere weisen aufgrund der Pfropfung verzweigte Strukturen auf und sind nicht für die Faserherstellung geeignet. GB2356830 beschreibt die thermoplastische Verformung von Acrylnitrilpolymeren mit 96-100% Acrylnitrilgehalt durch ein spezielles Druck- und Temperaturregime, der Autor schließt jedoch die Möglichkeit zum Einsatz für das Schmelzspinnen aufgrund der nötigen hohen Extruderdrücke aus.

Die umfangreichsten Patente zur inneren Weichmachung werden von Standard Oil gehalten. US5618901 beschreibt thermoplastische Acrylnitril-Copolymere, bestehend aus 50-95% Acrylnitril und 5-50% eines Comonomers, wobei zunächst alle denkbaren Comonomerklassen (Acrylate, Methacrylate, Acrylamide, Methacrylamide, Acrylamidderivate, Methacrylamidderivate, Vinylester, Vinylether, Vinylamide, Vinylketone, Styrol, halogenhaltige Monomere, ionische Monomere, säuregruppenhaltige Monomere, aminogruppenhaltige Monomere, Olefine und Kombinationen) abgedeckt werden. Die Ausführungsbeispiele geben Methylstyrol, Styrol, Vinylacetat, Methylacrylat und Methylmethacrylat mit mindestens 15wt% Anteil (entspricht für Methylacrylat ca. 10mol%) am Copolymer an. Die Copolymere konnten bei 200°C extrudiert werden. US6114034 beschreibt die Herstellung von Fasern aus eben diesen Copolymeren, wobei in den Ausführungsbeispielen ausschließlich Methylacrylat und Vinylacetat als Comonomere Verwendung finden, und zwar in einem Anteil von 15-25 Gew.- %. Es konnten Fasern hergestellt werden mit Durchmessern von 3-8 dtex und Festigkeiten bis zu 29cN/tex (15% Methylacrylat) bzw. 55cN/tex (25% Methylacrylat), die Spinntemperaturen lagen abhängig von der Molmasse zwischen 210°C (55.000g/mol) und 240°C (90.000g/mol). In WO 00/50675 wird die Nutzung der oben beschriebenen Copolymere zur Herstellung von Carbonfaser-Precursoren offenbart. Inhaltlich geht das Patent jedoch nicht über US6114034 hinaus. Als präferierte Comonomere werden Methylacrylat, Ethylacrylat, Methylmethacrylat und Vinylacetat angegeben.

Das oben bereits genannte US5618901 beansprucht einen Prozess zur Herstellung der schmelzespinnbaren PAN-Copolymere einen sogenannten "starved feed"- Polymerisations-Prozess. Ein solcher Prozess ist dadurch gekennzeichnet, dass die Monomermischung über den Reaktionszeitraum dosiert wird, und zwar mit einer Geschwindigkeit, die ≤ der Polymerisationsgeschwindigkeit des Systems ist (siehe Anspruch 1: "wherein the rate of addition of the multimonomer feed mixture is less than or equal to the rate of polymerization").

Die Reaktionsgeschwindigkeit eines derartigen Verfahrens ist dabei niemals zunehmend, dies zeigt sich auch anhand des beobachteten Wärmeflusses, der dabei maximal konstant, niemals allerdings zunehmend sein kann. Sämtliches dosiertes Monomer reagiert also stets sofort ab, es findet keine Monomeranreicherung im System statt und die Reaktionsgeschwindigkeit bleibt über die Dosierzeit konstant. Der im Patent für diese Verfahrensweise dargelegte Hintergrund ist, dass mit solch einem starved feed Prozess die Copolymere eine Zusammensetzungsverteilung aufweisen, die eine hohe thermische Stabilität unter thermoplastischen Verarbeitungsbedingungen ermöglichen.

Eigene Arbeiten zeigen jedoch, dass analog zu diesem Patent hergestellte Copolymere unter thermischer Belastung keine stabile Schmelzeviskosität aufweisen, sondern die Schmelzeviskosität aufgrund von Vernetzungserscheinungen zunimmt, wie nachfolgend in den Vergleichsbeispielen gezeigt wird. Durch die wissenschaftliche Literatur wird dies ebenfalls belegt (Bhanu et al.; Polymer 43 (2002) 4841-4850). Die thermische Stabilität der schmelzspinnbaren Copolymere ist jedoch das entscheidende Kriterium für einen technisch umsetzbaren Schmelzspinnprozess. Thermische Instabilität, wie sie die nach US5618901 erzeugten PAN-Copolymere aufweisen, verhindert einen langzeitstabilen Spinnprozess. Sie führt zu Vercrackungen an Hot-Spots im Spinnextruder, der Spinnpumpe und der Spinndüse und zu Fehlstellen in der gesponnenen Faser. Ein schmelzspinnbarer PAN-Precursor soll maximal llmol% Comonomer aufweisen, bei Temperaturen <240°C mittels Schmelzspinnen verarbeitbar sein sowie bei und oberhalb der Verarbeitungstemperatur eine hohe thermische Stabilität aufweisen, um Temperaturspitzen durch mechanische Belastungen in Spinnextruder und Spinnpumpe tolerieren zu können.

Eine stoffliche Verbesserung der geschilderten Situation wird bereits durch die Patentanmeldung DE 10 2014 219 707.4 bereitgestellt. Hier werden anstelle der o.g. Comonomere Alkoxyalkylacrylate als Comonomere verwendet, wobei gezeigt werden konnte, dass derartige PAN-Copolymere eine verbesserte thermische Stabilität unter Verarbeitungsbedingungen aufweisen.

Neben der stofflichen Basis beeinflusst die Prozessführung der Polymerisation und die daraus resultierende Statistik der Zusammensetzung im Copolymer die thermische Stabilität der PAN-Copolymere ebenfalls entscheidend, wie US 5618901 richtig feststellt.

Nach wie vor ist es jedoch wünschenswert, Synthesemethoden zu finden, mit denen die thermische Stabilität von PAN-Copolymeren weiter verbessert werden kann, so dass derartige Copolymere sich insbesondere auch zum Schmelzespinnen eignen.

Diese Aufgabe wird hinsichtlich eines Verfahrens zur Herstellung von PAN-Copolymeren mit den Merkmalen des Patentanspruchs 1 bezüglich eines entsprechend hergestellten PAN-Copolymeren mit den Merkmalen des Patentanspruchs 14 gelöst. Mit Patentanspruch 16 werden Formkörper, die aus den erfindungsgemäß hergestellten PAN-Copolymeren bestehen, beschrieben, während Patentanspruch 17 ein Herstellungsverfahren zur Herstellung der erfindungsgemäßen Formkörper angibt. Die jeweilig abhängigen Patentansprüche stellen dabei vorteilhaft die Weiterbildungen dar.

Die vorliegende Erfindung betrifft somit ein Verfahren zur Herstellung von PAN-Copolymeren durch radikalische Copolymerisation mindestens eines Acrylnitril-Monomers und mindestens eines radikalisch polymerisierbaren Comonomeren, bei dem
ein initiales Gemisch enthaltend mindestens ein Acrylnitril-Monomeres und mindestens ein radikalisch polymerisierbares Comonomers vorgelegt wird,
eine radikalische Polymerisationsreaktion initiiert wird,
wobei vor, während und/oder nach Initiierung ein Gemisch enthaltend das mindestens eine Acrylnitril-Monomer und das mindestens eine radikalisch polymerisierbare Comonomeren dem initialen Gemisch so zudosiert wird, dass
die Reaktionsgeschwindigkeit der radikalen Polymerisationsreaktion und/oder der bei der radikalischen Polymerisation freigesetzte Wärmefluss über den gesamten Zeitraum der Zudosierung zumindest zeitweise stetig zunehmend, niemals jedoch fallend ist.

Gemäß der vorliegenden Erfindung wird somit ein initiales Gemisch aus mindestens einem Acrylnitril-Monomer und mindestens einem radikalisch polymerisierbaren Comonomeren, das mit dem Acrylnitril-Monomeren reagieren kann, vorgelegt.

Es wird eine radikalische Polymerisationsreaktion initiiert. Vor, während, und/oder nach Initiierung der radikalischen Polymerisationsreaktion wird ein Gemisch, das weitere radikalisch polymerisierbare Monomere beinhaltet, zum Reaktionsgemisch zugegeben.

Wesentlich bei der vorliegenden Erfindung ist, dass der Verlauf der Reaktion so gesteuert wird, dass zumindest zeitweise oder bevorzugt während der gesamten Zudosierung von weiteren radikalisch polymerisierbaren Monomeren zum Reaktionsgemisch stets eine leichte Geschwindigkeitszunahme der Reaktion gegeben ist. Dies kann sich beispielsweise auch dadurch ausdrücken, dass der freigesetzte Wärmefluss bei der radikalischen Polymerisation zunehmend ist.

Die Zunahme ist erfindungsgemäß zumindest zeitweise stetig zunehmend, niemals jedoch abnehmend. Die Reaktionsgeschwindigkeit bzw. der freigesetzte Wärmefluss kann dabei während der Zudosierung des weiteren Gemischs somit auch zumindest zeitweise stagnieren.

Überraschenderweise konnte festgestellt werden, dass mit dem erfindungsgemäßen Verfahren, insbesondere im Vergleich zur von der US 5,618,901 vorgestellten Verfahrensführung, PAN-Copolymere erhältlich sind, die - obwohl von gleicher chemischer Konstitution - eine deutlich verbesserte thermische Stabilität, eine deutlich verbesserte thermische Verarbeitbarkeit und eine deutlich geringere Tendenz zum thermischen Abbau aufweisen. Insgesamt können die erfindungsgemäß herstellbaren PAN-Copolymere somit als deutlich stabiler bezeichnet werden.

Das erfindungsgemäße Verfahren ermöglicht völlig überraschenderweise die Herstellung von bei vergleichsweise niedrigen Temperaturen thermoplastisch verarbeitbaren PAN-Copolymeren, verbunden mit relativ geringen Schmelzeviskositäten sowie einer sehr hohen thermischen Stabilität der Schmelze.

Thermoplastisch verarbeitbares PAN kann unter anderem durch das im Vergleich zum Lösungsspinnen deutlich effizientere und preiswertere Schmelzespinnen zu Fasern verarbeitet werden. Es kommt bei der thermoplastischen Verarbeitung und vor allem beim Schmelzspinnprozess nicht zu Abbau- und Vernetzungsprozessen. Die Schmelze hat konstante Eigenschaften über die Zeit, die ein reproduzierbares und qualitativ hochwertiges Verspinnen und Verarbeiten erlauben.

Die erfindungsgemäßen Copolymere können zur Herstellung von Precursorfasern für C-Fasern sowie zur Herstellung technischer Acrylfasern, beides mittels Schmelzespinnen, genutzt werden. Zusätzlich ist thermoplastisches PAN ggf. auch zur Herstellung von PAN-Formkörpern mittels thermoplastischer Verarbeitungsverfahren wie Spritzguss, Extrusion oder 3D-Druck verwendbar.

Gemäß einer bevorzugten Ausführungsform ist die Reaktionsgeschwindigkeit der radikalen Polymerisationsreaktion und/oder der bei der radikalischen Polymerisation freigesetzte Wärmefluss über den gesamten Zeitraum der Zudosierung stetig zunehmend.

Alternativ hierzu ist es ebenso möglich und erfindungsgemäß bevorzugt, dass die Reaktionsgeschwindigkeit bzw. der freigesetzte Wärmefluss zumindest oder genau über einen ersten Teil des Zeitraums der Zudosierung stetig zunehmend ist und in zumindest oder genau einem weiteren Teil konstant gehalten wird, wobei bevorzugt der erste Teil des Zeitraums mindestens 30 %, bevorzugt mindestens 40 % bis 95 %, besonders bevorzugt 50 % bis 90 % des gesamten Zeitraums der Zudosierung ausmacht.

Gemäß dieser zuletzt dargestellten Ausführungsform findet somit in einem zeitlich ersten Teil der Polymerisationsreaktion eine wie oben dargestellte Beschleunigung der Reaktionsgeschwindigkeit statt, während die Reaktion in einem weiteren zeitlichen Teil des Polymerisationsprozesses so gesteuert werden kann, dass eine Konstanz der Reaktionsgeschwindigkeit bzw. der Freisetzung des Wärmeflusses zu verzeichnen ist.

Unabhängig voneinander oder in Kombination miteinander können das initiale Gemisch und/oder das zudosierte Gemisch
a) als Acrylnitril-Monomere Acrylnitril, Methacrylnitril oder Mischungen hiervon und/oder
b) als das mindestens eine radikalisch polymerisierbare Comonomere mindestens ein Alkoxyalkylacrylat, Alkylacrylat, Vinylester, Styrol,
substituierte Styrole wie Methylstyrol, Acrylamid, N-substituierte Acrylamide, *N,N*-ringförmig substituierte Acrylamide, N-substituierte N-Vinylamide, *N,N*-ringförmig substituierte *N*-Vinylamide, säurehaltige Monomere wie Acrylsäure, Methacrylsäure, Vinylsulfonsäure, Itaconsäure, ionische Monomere wie Natriumvinylsulfonat, Natriumstyrolsulfonat, Natriumacrylat, Natriummethacrylat oder Mischungen aus mindestens zwei der zuvor genannten Verbindungen enthalten oder bezüglich des mindestens einen Acrylnitril-Monomeren und des mindestens einen radikalisch polymerisierbaren Comonomeren hieraus bestehen.

Insbesondere ist es besonders bevorzugt, dass das initiale Gemisch und/oder das zudosierte Gemisch
a) als Acrylnitril-Monomer 95 bis 80 mol-% Acrylnitril sowie
b) als das mindestens eine Comonomer
   i) 5 bis 20 mol-% mindestens eines Alkoxyalkylacrylats der allgemeinen Formel I 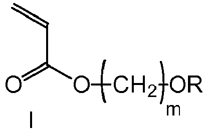 mit R = CₙH₂ₙ₊₁ und n = 1-8 und m = 1-8, insbesondere n=1-4 und m=1-4,
   ii) 0 bis 10 mol-% mindestens eines Alkylacrylats der allgemeinen 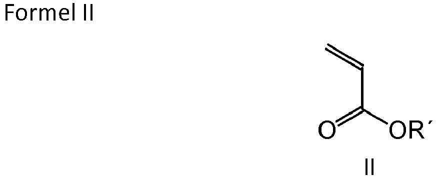 mit R' = CₙH₂ₙ₊₁ und n = 1-18, und
   iii) 0 bis 10 mol-% mindestens eines Vinylesters der allgemeinen 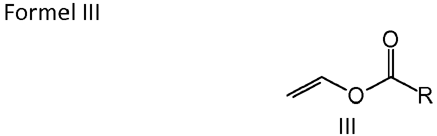 mit R = CₙH₂ₙ₊₁ und n = 1-18
bezogen auf die Gesamtheit aus Acrylnitril-Monomeren und Copolymeren enthält oder bezüglich des mindestens einen Acrylnitril-Monomeren und des mindestens einen radikalisch polymerisierbaren Comonomeren hieraus besteht.

Die zuletzt vorgestellten besonders bevorzugten PAN-Copolymeren-Systeme sind Gegenstand der deutschen Patentanmeldung DE 10 2014 219 707.

Sämtliche dort vorgestellten PAN-Copolymere können auch für die Zwecke der vorliegenden Erfindung verwendet werden.

Die vorliegende Erfindung ist allerdings nicht auf die zuletzt diskutierten PAN-Copolymere beschränkt, beispielsweise können auch die von der US 5,618,901 angesprochenen PAN-Copolymeren gemäß dem erfindungsgemäßen Verfahren hergestellt werden. Bezüglich dieser Copolymeren-Systeme wird der Offenbarungsgehalt der US 5,618,901.

Das initiale Gemisch oder das zudosierte Gemisch oder beide Gemische können mindestens ein Lösungsmittel enthalten, in dem sich die zu polymerisierenden Spezies lösen bzw. dispergieren lassen.

Bevorzugte Lösungsmittel sind hierbei ausgewählt aus der Gruppe bestehend aus Wasser, Alkoholen oder Mischungen hiervon, wobei Wasser insbesondere bevorzugt ist. Bei Einsatz von Wasser kann somit auf organische Lösungsmittel verzichtet werden.

Gemäß einer weiteren bevorzugten Ausführungsform ist der Gehalt des Lösungsmittels im initialen Gemisch größer, als der Gehalt des Lösungsmittels im zudosierten Gemisch.

Insbesondere ist bevorzugt, wenn der Gehalt des Lösungsmittels im initialen Gemisch von 80 bis 99,9 Gew.-%, bevorzugt von 90 bis 98 Gew.-% beträgt. Weiter ist bevorzugt, wenn das initiale Gemisch und/oder das zudosierte Gemisch mindestens einen Emulgator, enthält, wobei der mindestens eine Emulgator bevorzugt
ausgewählt ist aus der Gruppe bestehend aus Alkylsulfonaten, Alkylsulfaten, Aralkylsulfonaten, Aralkylcarboxylaten, Acrylsulfonaten, Fettsäure-Seifen, Harzseifen und/oder
in Mengen von 0,001 bis 5 Gew.-%, bevorzugt 0,01 bis 2,5 Gew.-%, besonders bevorzugt 0,1 bis 1 Gew.-%, jeweils bezogen auf das initielle Gemisch bzw. das zudosierte Gemisch enthalten ist.

Gemäß einer weiteren bevorzugten Ausführung ist ferner vorgesehen, dass das initiale Gemisch und/oder das zudosierte Gemisch mindestens eine Ketten übertragende Substanz enthält wobei bevorzugt die mindestens eine Ketten übertragende Substanz
ausgewählt ist aus der Gruppe bestehend aus Mercaptanen, insbesondere Benzylmercaptan, monofunktionelle Alkylmercaptane, multifunktionelle Alkylmercaptane, andere organische Schwefelverbindungen wie Disulfide sowie Mischungen oder Kombinationen hiervon und/oder
in Mengen von 0,001 bis 2 Gew.-%, bevorzugt 0,01 bis 1 Gew.-%, besonders bevorzugt 0,05 bis 0,5 Gew.-%, jeweils bezogen auf das initiale Gemisch bzw. das zudosierte Gemisch enthalten ist.

Die Polymerisationsreaktion kann chemisch, thermisch oder mittels Bestrahlung initiiert werden, insbesondere chemisch durch Zugabe eines Radikalstarters zum initialen Gemisch und/oder zum zudosierten Gemisch.

Besonders bevorzugt wird das zudosierte Gemisch getrennt zum initialen Gemisch zudosiert, wobei ein erster Teil des zudosierten Gemischs das mindestens eine Acrylnitril-Monomer, das mindestens eine Comonomer und mindestens eine Ketten übertragende Substanz enthält oder hieraus besteht und ein zweiter Teil mindestens ein Lösungsmittel und mindestens einen Radikalstarter enthält oder hieraus besteht. Der erste Teil des zudosierten Gemisches ist dabei bevorzugt lösungsmittelfrei, insbesondere frei von Wasser.

Die Reaktion kann beispielsweise bei Temperaturen von 30 bis 90°C, bevorzugt von 50 bis 80°C, geführt werden. Hierbei wird beispielsweise das initiale Gemisch bzw. das bei Addition des weiteren Gemischs zum initialen Gemisch entstehende Reaktionsgemisch auf die entsprechende Temperatur temperiert. Die Temperierung kann bereits vor Initiierung der Polymerisationsreaktion erfolgen, ebenso ist es allerdings auch möglich, dass die Reaktion kalt gestartet wird, d. h. beispielsweise von Normaltemperatur ausgehend gestartet wird.

Hierbei ist es möglich, dass die Polymerisation isotherm geführt wird, d. h. dass die Temperatur des Reaktionsgemisches konstant bzw. im Wesentlichen konstant (d. h. im Rahmen einer Toleranz von ± 5°C von einer vorgegebenen fixen Temperatur) geführt wird.

Insbesondere wird die radikalische Polymerisation als Emulsionspolymerisation geführt.

Gegenstand der vorliegenden Erfindung ist ebenso ein Polyacrylnitril-Copolymer, herstellbar nach einem Verfahren nach einem der vorhergehenden Ansprüche.

Überraschenderweise wurde erkannt, dass die auf die erfindungsgemäße Weise hergestellten PAN-Copolymere deutlich bessere thermische Beständigkeit aufweisen, als ansonsten chemisch identische PAN-Copolymere, die gemäß Verfahren aus dem Stand der Technik hergestellt wurden.

Die besondere thermische Stabilität ist insbesondere durch den Sol-Gel-Übergang feststellbar.

Der Sol-Gel-Übergang der erfindungsgemäßen PAN-Copolymere kann mittels eines rheologischen Oszillationsexperiments mit einer Platte-Platte-Konfiguration (Durchmesser 20 mm, Spalt 0,5 mm) bei einer Schubspannungsamplitude von 200Pa, bei einer Frequenz von 1,6 Hz und einer Temperatur von 235°C bestimmt werden. Hierbei werden die zeitlichen Verläufe des Speichermoduls G' und des Verlustmoduls G" ermittelt, der Schnittpunkt des Speichermoduls G' und des Verlustmoduls G" wird als Sol-Gel-Übergang bestimmt und in einer zeitlichen Einheit, beispielsweise Sekunden, angegeben.

Die erfindungsgemäß hergestellten PAN-Copolymere zeichnen sich bevorzugt durch einen Sol-Gel-Übergang aus, der zumindest 30 % größer ist, verglichen mit einem identischen Polyacrylnitril-Copolymer, hergestellt nach einem starved-feed-Verfahren. Als starved-feed-Verfahren wird hierbei das gemäß der US 5,618,901 beschriebene Verfahren verstanden. Gemäß diesem Parameter sind PAN-Copolymere, die mit dem erfindungsgemäßen Verfahren hergestellt wurden, um zumindest 30 % stabiler als chemisch-identische PAN-Copolymere, die gemäß dem starved-feed-Verfahren gemäß US 5,618,901 hergestellt wurden.

Alternativ oder zusätzlich hierfür tritt der Sol-Gel-Übergang bei den erfindungsgemäßen PAN-Copolymeren bevorzugt nach mindestens 1200 s, bevorzugt mindestens 1500 s, weiter bevorzugt mindestens 2000 s, insbesondere mindestens 3000 s auf.

Zudem sind Formkörper, erhältlich aus einem Polyacrylnitril-Copolymeren nach einem der beiden vorhergehenden Ansprüche, insbesondere in Form eines Mono- oder Multifilamentes, Gegenstand der vorliegenden Erfindung. Erfindungsgemäß wird ebenso ein Verfahren zur Herstellung eines zuvor beschriebenen Formkörpers angegeben, bei dem ein erfindungsgemäß hergestelltes PAN-Copolymere einem formgebenden Prozess unterzogen wird, insbesondere bei dem das Polyacrylnitril-Copolymere schmelzgesponnen und dadurch ein Mono- oder Multifilament hergestellt wird.

Die vorliegende Erfindung wurde anhand der nachfolgenden Ausführung näher beschrieben, ohne den Gegenstand der vorliegenden Erfindung zu beschränken.

Gemäß der vorliegenden Erfindung wurde erkannt, dass insbesondere innerhalb eines Emulsionspolymerisationsprozesses ein kontrolliertes Abweichen vom starved-feed Regime PAN-Copolymere mit weitaus höheren thermischen Stabilitäten erzeugt und zusätzlich zu weiteren Verbesserungen führt.

Ein Abweichen vom starved feed Prozess bedeutet, dass in der Anfangsphase der Polymerisation oder über den gesamten Prozessverlauf eine sukzessive Monomeranreicherung im System und damit eine Beschleunigung der Polymerisation über die Zeit zugelassen wird. In kontrollierter Weise kann dies im Rahmen dieser Erfindung dadurch erreicht werden, dass entweder die Dosierzeit des Monomers im Vergleich zu einem starved feed Prozess verkürzt wird und/oder zu Beginn der Polymerisation eine verhältnismäßig große Menge einer kettenübertragenden Substanz vorgelegt wird, die neben der Regelung der Molmasse in großen Anteilen auch zu einer teilweisen Inhibierung der Polymerisation führt.

Ein kontrolliertes Abweichen vom starved-feed-Regime bedeutet auf der anderen Seite, dass Dosierregime und/oder Einsatzmenge der kettenübertragenden Substanz so gewählt werden, dass es im Prozessverlauf nicht zu Peaks/Spitzen in der Reaktionsgeschwindigkeit kommt, da sich eine solche zu schnelle Reaktion negativ auf die thermische Stabilität der Copolymere und auf die Kontrolle eines technischen Polymerisationsprozesses auswirkt.

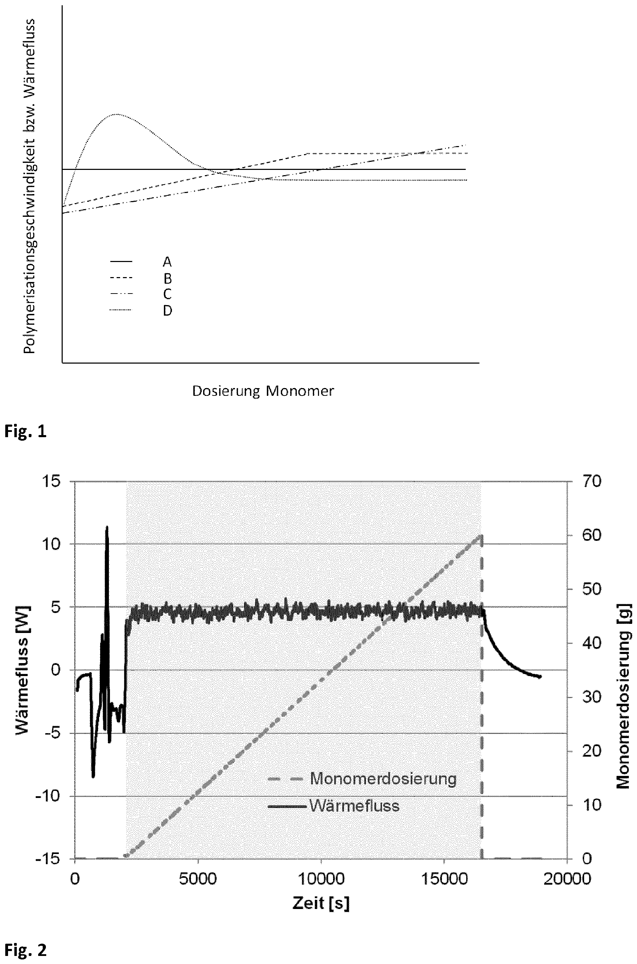

Zur Illustration: In Fig. 1 sind schematisch Polymerisationsgeschwindigkeiten bzw. Wärmeflüsse von semi-batch-Emulsionspolymerisationen über der Dosierzeit der Monomermischung aufgetragen. Der Fall A entspricht einem starved-feed-Prozess, die Fälle B und C erfindungsgemäßen Verläufen und der Fall D einer nicht erfindungsgemäßen, da zu schnellen Reaktion, bei der zwar ein bereichsweise stetiger Anstieg der Reaktionsgeschwindigkeit beobachtet werden kann, allerdings auch ein Abfall der Reaktionsgeschwindigkeit im weiteren Verlauf.

Gegenstand der vorliegenden Erfindung ist somit insbesondere ein kontrolliert von einem starved-feed-Regime abweichender semibatch-Emulsionspolymerisationsprozess zur Herstellung von schmelzspinnbaren PAN-Copolymeren, der unter stofflichem Aspekt auch anwendbar ist auf die in der DE 10 2014 219 707.4 abgedeckten PAN-Copolymere und die mit US 5,618,901 abgedeckten PAN-Copolymerklassen, wie die Ausführungsbeispiele zeigen. Bevorzugt wird die in DE 10 2014 219 707.4 ausgeführte stoffliche Basis bezüglich Zusammensetzung und Molmasse.

Es wurde gefunden, dass PAN-Copolymere, die entsprechend des erfindungsgemäßen Prozesses hergestellt wurden, bei gleicher Molmasse und Zusammensetzung im Vergleich zu nach nicht erfindungsgemäßen Prozessen hergestellten Copolymeren über geringere Schmelzpunkte, niedrigere Schmelzeviskositäten und höhere thermische Stabilitäten verfügen. Die erfindungsgemäßen PAN-Copolymere lassen sich mittels Schmelzespinnen verarbeiten, wobei die erhaltenen Fasern über gute mechanische Eigenschaften und Orientierungsgrade verfügen.

In den folgenden Anwendungsbeispielen werden folgende Methoden zur Charakterisierung des Prozesses und der PAN-Copolymere herangezogen:
- Als Maß für den Verlauf der Polymerisation und zur Differenzierung der verschiedenen Prozessverläufe dient der Wärmefluss während der Polymerisationen. Polymerisationen sind exotherme Reaktionen, d.h. über den Reaktionsverlauf wird eine dem Umsatz der Polymerisation proportionale Wärmemenge freigesetzt. Diese lässt sich mit Hilfe eines Reaktionskalorimeters zeitaufgelöst erfassen. Das hier verwendete Gerät (RCle von Mettler-Toledo) zeichnet Wärmestromtrends in Echtzeit auf. Da diese Aufzeichnung gerade bei Reaktionen unter Dosierung eines Reaktionspartners mit starken punktuellen Ausschlägen der Wärmeflüsse verbunden sein kann, wird zur Darstellung in den entsprechenden Grafiken der gleitende Durchschnitt der aufgezeichneten Werte über je 50 Messpunkte verwendet.
   Erfindungsgemäße Prozesse zeichnen sich dadurch aus, dass der so aufgezeichnete, der Reaktionsgeschwindigkeit proportionale Wärmefluss bevorzugt über den gesamten Verlauf oder über die erste Phase der Monomerdosierung stetig (nahezu linear) ansteigt, ohne im Zeitraum der Monomerdosierung ein ausgeprägtes Maximum zu durchlaufen. Nicht erfindungsgemäße Reaktionen sind dadurch gekennzeichnet, dass der Wärmefluss entweder während der Monomerdosierung nahezu konstant bleibt (parallel zur x-Achse verläuft = "starved feed"; Vergleichsbeispiele 1 + 2) oder im gegenteiligen Fall ein ausgeprägtes Maximum aufweist (Vergleichsbeispiel 3; Standardverlauf einer Emulsionspolymerisation):
- Charakterisierung der Zusammensetzung über ¹H-NMR
- Vergleichende Bestimmung einer Kennzahl für die Molmasse über die Messung der relativen Viskosität einer 1%igen Lösung in DMSO bei 30°C
- Ermittlung des Schmelzpunktes über Schmelztischmikroskopie
- Ermittlung der Nullscherviskosität bei 235°C mit einem Platte-Platte - Rheometer im Frequenzsweep-Modus (Rotationsexperiment)
- Ermittlung der thermischen Stabilität der Polymerschmelze bei 235°C ebenfalls über eine rheologische Messung (HAAKE Rheometer Rheostress RS150): Platte-Platte-Konfiguration (Durchmesser 20mm, Spalt 0,5mm); Oszillationsexperiment im linear-viskoelastischen Bereich bei einer Schubspannungsamplitude von 200Pa. Mit diesem Messgerät lassen sich ebenso der Speichermodul G' und der Verlustmodul G" ermitteln. Eine Aufzeichnung des Speichermoduls (G') und des Verlustmoduls (G") über 3600 s bei einer Frequenz von 1,6 Hz ermöglichte die Bestimmung des Schnittpunktes beider Kurven als Maß für die thermische Stabilität ("Sol-Gel-Übergang").

### Anwendungsbeispiele:

### Vergleichsbeispiel 1 (nicht erfindungsgemäß) Copolymerisation von Acrylnitril und Methylacrylat noch US5618901 in einem starved-feed-Prozess

In einem automatischen Reaktionskalorimeter RCle von Mettler Toledo, ausgerüstet mit einem 500ml-Doppelmantelreaktor mit Rückflusskühlung und Propellerrührer wurden unter Rührung bei 400rpm 7,6g (6,725 mL) Calfax 16L-35 als Emulgator in 185g destilliertem Wasser gelöst. Anschließend wurden 0,463g (0,545 mL) Laurylmercaptan, 5,65 g (7,05 mL) Acrylnitril und 1,0g (1,05 mL) Methylacrylat zugegeben und mit N2 über 15 min inertisiert. Die Temperatur wurde auf 70°C erhöht. Nach Erreichen der Temperatur wurden 0,07g Ammoniumpersulfat (APS) zugegeben. Über zwei Pumpkreisläufe, gesteuert über zwei Waagen, werden einerseits 1,385g (1,63 mL) Laurylmercaptan, 51g Acrylnitril und 9g Methylacrylat und andererseits 0,06g APS in 15g Wasser gleichzeitig über 4h zudosiert. Anschließend wird noch 30 Minuten bei 70°C gehalten. Die entstandene Polymerdispersion wird abgekühlt und das Polymer in 0,1%iger Aluminiumsulfat-Lösung gefällt, extensiv mit Wasser und Ethanol gewaschen und im Vakuum bei 50°C getrocknet.

Das Polymer hatte eine relative Viskosität von 1,58. Der vom RCle aufgezeichnete Wärmefluss hatte den in Figur 2 gezeigten Verlauf, der einen starved-feed-Prozess charakterisiert.

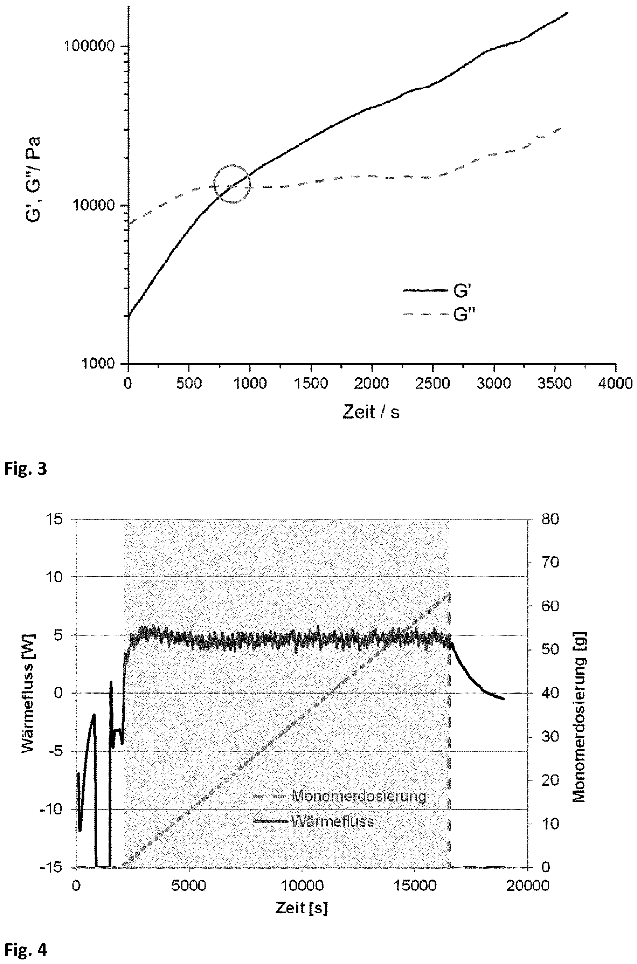

Die Zusammensetzung des Copolymers wurde zu 9,3mol% Methylacrylat und 90,7mol% Acrylnitril bestimmt. Die Schmelztemperatur des Copolymers betrug 244°C. Die Nullscherviskosität bei 235°C betrug 4959 Pas. Der Schnittpunkt von G' und G" bei 235°C war nach 14 Minuten erreicht, wie Figur 3 zeigt.

### Vergleichsbeispiel 2 (nicht erfindungsgemäß) Copolymerisation von Acrylnitril und Methoxyethylacrylat nach starved-feed-Prozess

In einem automatischen Reaktionskalorimeter RCle von Mettler Toledo, ausgerüstet mit einem 500ml-Doppelmantelreaktor mit Rückflusskühlung und Propellerrührer wurden unter Rührung bei 400rpm 7,6g (6,725 mL) Calfax 16L-35 als Emulgator in 185g destilliertem Wasser gelöst. Anschließend wurden 0,439g (0,515 mL) Laurylmercaptan, 5,36 g (6,7 mL) Acrylnitril und 1,42g (1,4 mL) Methoxyethylacrylat zugegeben und mit N2 über 15 min inertisiert. Die Temperatur wurde auf 70°C erhöht. Nach Erreichen der Temperatur wurden 0,065g Ammoniumpersulfat (APS) zugegeben. Über zwei Pumpkreisläufe, gesteuert über zwei Waagen, werden einerseits 1,315g (1,55 mL) Laurylmercaptan, 48,5g Acrylnitril und 12,9g Methoxyethylacrylat und andererseits 0,055g APS in 15g Wasser gleichzeitig über 4h zudosiert. Anschließend wird noch 30 Minuten bei 70°C gehalten. Die entstandene Polymerdispersion wird abgekühlt und das Polymer in 0,1%iger Aluminiumsulfat-Lösung gefällt, extensiv mit Wasser und Ethanol gewaschen und im Vakuum bei 50°C getrocknet.

Das Polymer hatte eine relative Viskosität von 1,47. Der vom RCle aufgezeichnete Wärmefluss hatte den in Figur 4 gezeigten Verlauf, der einen starved-feed-Prozess charakterisiert.

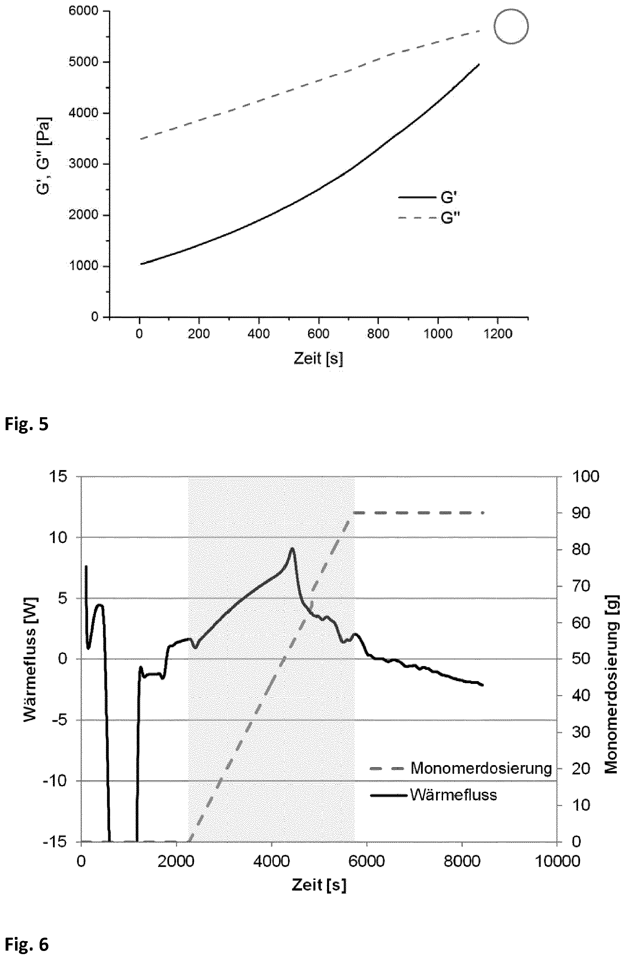

Die Zusammensetzung des Copolymers wurde zu 9,8mol% Methoxyethylacrylat und 90,2mol% Acrylnitril bestimmt. Die Schmelztemperatur des Copolymers betrug 213°C. Die Nullscherviskosität bei 235°C betrug 328 Pas. Der Schnittpunkt von G' und G" bei 235°C ist nach etwa 20 Minuten erreicht, wie Figur 5 zeigt.

### Vergleichsbeispiel 3 (nicht erfindungsgemäß, Emulsionspolymerisation mit Maximum im Wärmefluss)

In einem automatischen Reaktionskalorimeter RC1 von Mettler Toledo, ausgerüstet mit einem 1000ml-Doppelmantelreaktor mit Rückflusskühlung und Ankerrührer wurden unter Rührung bei 450rpm 3,0g (2,655 mL) Calfax 16L-35 als Emulgator in 370g destilliertem Wasser gelöst. Die Lösung wurde mit N2 über 15 min inertisiert. Die Temperatur wurde auf 70°C erhöht. Anschließend wurden 0,285g (0,269 mL) Benzylmercaptan, 37,5 g (46,8 mL) Acrylnitril, 9,96g (9,84 mL) Methoxyethylacrylat und 0,13g Ammoniumpersulfat zugegeben. Nach 10 min wurden über zwei Pumpkreisläufe, gesteuert über zwei Waagen, einerseits 0,336g (0,317 mL) Benzylmercaptan, 70,23g Acrylnitril und 18,68g Methoxyethylacrylat und andererseits 0,11g APS in 30g Wasser gleichzeitig über 1h zudosiert. Anschließend wird noch 45 Minuten bei 70°C gehalten. Die entstandene Polymerdispersion wird abgekühlt und das Polymer in 0,1%iger Aluminiumsulfat-Lösung gefällt, extensiv mit Wasser und Ethanol gewaschen und im Vakuum bei 50°C getrocknet.

Das Polymer hatte eine relative Viskosität von 4,57. Der vom RC1 aufgezeichnete Wärmefluss hatte den in Figur 6 gezeigten Verlauf, der einen normalen Emulsions-polymerisationsprozess, bei dem der Wärmefluss ein Maximum durchläuft, charakterisiert.

Die Zusammensetzung des Copolymers wurde zu 10,0mol% Methoxyethylacrylat und 90,0mol% Acrylnitril bestimmt. Das Polymer schmolz bis 250°C nicht vollständig auf, bei höheren Temperaturen wurde bereits eine Verfärbung über rötlich zu schwarz beobachtet, die den Beginn der Cyclisierungsreaktion im PAN charakterisiert.

### Ausführungsbeispiel 1 (erfindungsgemäß)

In einem automatischen Reaktionskalorimeter RCle von Mettler Toledo, ausgerüstet mit einem 500ml-Doppelmantelreaktor mit Rückflusskühlung und Propellerrührer wurden unter Rührung bei 400rpm 1,5g (1,33 mL) Calfax 16L-35 als Emulgator in 185g destilliertem Wasser gelöst. Anschließend wurden 0,251g (0,237 mL) Benzylmercaptan, 5,36 g (6,7 mL) Acrylnitril und 1,42g (1,4 mL) Methoxyethylacrylat zugegeben und mit N2 über 15 min inertisiert. Die Temperatur wurde auf 70°C erhöht. Nach Erreichen der Temperatur wurden 0,065g Ammoniumpersulfat (APS) zugegeben. Über zwei Pumpkreisläufe, gesteuert über zwei Waagen, werden einerseits 0,742g (0,70 mL) Benzylmercaptan, 48,5g Acrylnitril und 12,9g Methoxyethylacrylat und andererseits 0,055g APS in 15g Wasser gleichzeitig über 3h zudosiert. Anschließend wird noch 30 Minuten bei 70°C gehalten. Die entstandene Polymerdispersion wird abgekühlt und das Polymer in 0,1%iger Aluminiumsulfat-Lösung gefällt, extensiv mit Wasser und Ethanol gewaschen und im Vakuum bei 50°C getrocknet.

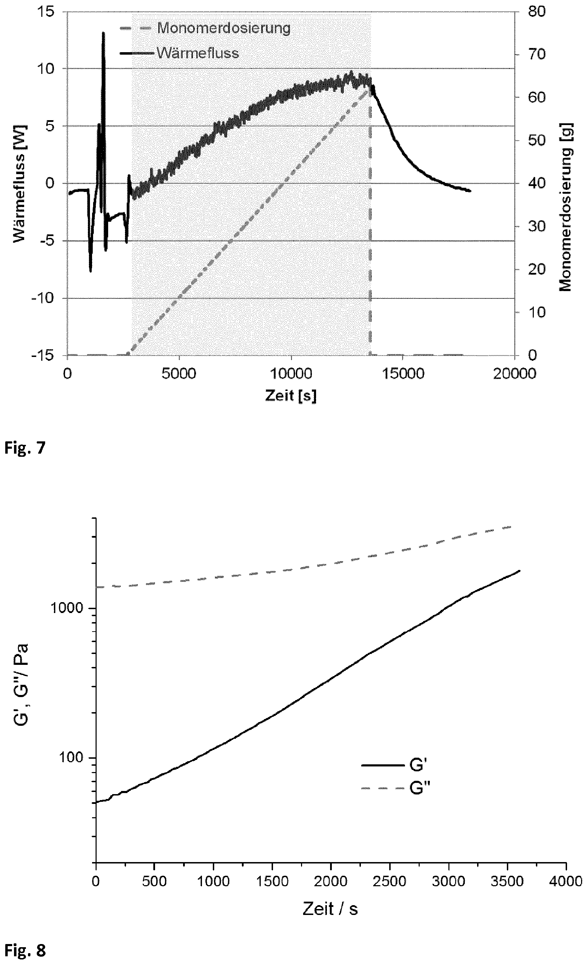

Das Polymer hatte eine relative Viskosität von 1,46. Der vom RCle aufgezeichnete Wärmefluss hatte den in Figur 7 gezeigten Verlauf, der charakteristisch für eine Anreicherung von Monomer über die Dosierzeit und eine dadurch verursachte Erhöhung der Reaktionsgeschwindigkeit über die Zeit ist.

Die Zusammensetzung des Copolymers wurde zu 10,0mol% Methoxyethylacrylat und 90,0mol% Acrylnitril bestimmt. Die Schmelztemperatur des Copolymers betrug 212°C. Die Nullscherviskosität bei 235°C betrug 156 Pas. Der Schnittpunkt von G' und G" bei 235°C wird innerhalb von 60 Minuten nicht erreicht, wie Figur 8 zeigt.

### Ausführungsbeispiel 2 (erfindungsgemäß)

In einem automatischen Reaktionskalorimeter RCle von Mettler Toledo, ausgerüstet mit einem 500ml-Doppelmantelreaktor mit Rückflusskühlung und Propellerrührer wurden unter Rührung bei 400rpm 1,5g (1,33 mL) Calfax 16L-35 als Emulgator in 185g destilliertem Wasser gelöst. Anschließend wurden 0,260g (0,246 mL) Benzylmercaptan, 5,65 g (7,05 mL) Acrylnitril und 1,00g (1,05 mL) Methylacrylat zugegeben und mit N2 über 15 min inertisiert. Die Temperatur wurde auf 70°C erhöht. Nach Erreichen der Temperatur wurden 0,07g Ammoniumpersulfat (APS) zugegeben. Über zwei Pumpkreisläufe, gesteuert über zwei Waagen, werden einerseits 0,769g

(0,726 mL) Benzylmercaptan, 51,0g Acrylnitril und 9,0g Methylacrylat und andererseits 0,06g APS in 15g Wasser gleichzeitig über 4h zudosiert. Anschließend wird noch 30 Minuten bei 70°C gehalten. Die entstandene Polymerdispersion wird abgekühlt und das Polymer in 0,1%iger Aluminiumsulfat-Lösung gefällt, extensiv mit Wasser und Ethanol gewaschen und im Vakuum bei 50°C getrocknet.

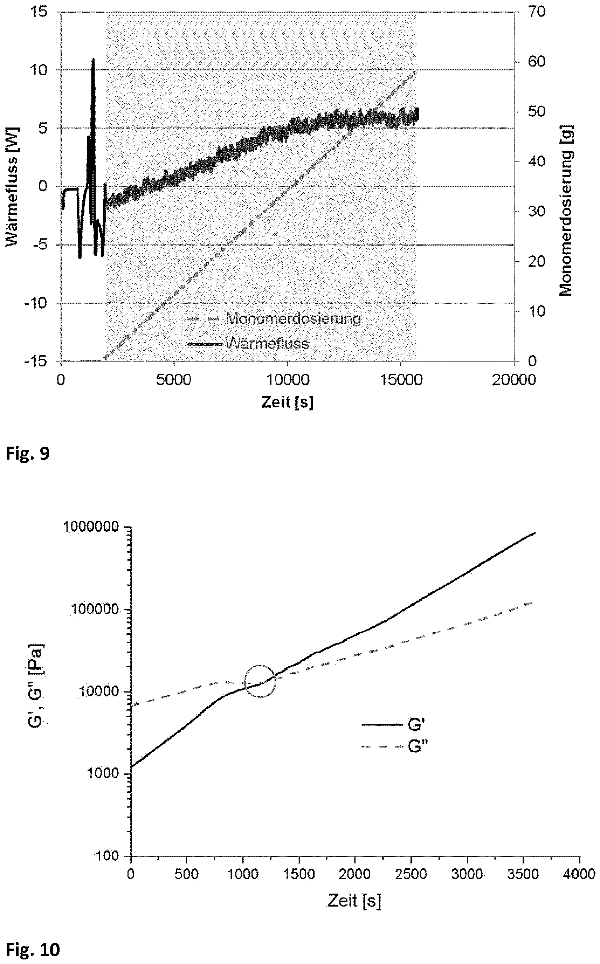

Das Polymer hatte eine relative Viskosität von 1,59. Der vom RCle aufgezeichnete Wärmefluss hatte den Figur 9 gezeigten Verlauf, der charakteristisch für eine Anreicherung von Monomer über die Dosierzeit und eine dadurch verursachte Erhöhung der Reaktionsgeschwindigkeit über die Zeit ist.

Die Zusammensetzung des Copolymers wurde zu 9,3mol% Methylacrylat und 90,7mol% Acrylnitril bestimmt. Die Schmelztemperatur des Copolymers betrug 216°C und liegt damit um fast 30°C unterhalb des in Vgl.beispiel 1 beschriebenen Copolymers. Die Nullscherviskosität bei 235°C betrug 773 Pas und war damit ca. um den Faktor 6 geringer als im Vergleichsbeispiel 1. Der Schnittpunkt von G' und G" bei 235°C wird innerhalb von 20 Minuten und damit ca. um 30% später als im Vergleichsbeispiel 1 erreicht, wie Figur 10 zeigt.

### Ausführungsbeispiel 3 (erfindungsgemäß)

In einem automatischen Reaktionskalorimeter RCle von Mettler Toledo, ausgerüstet mit einem 500ml-Doppelmantelreaktor mit Rückflusskühlung und Propellerrührer wurden unter Rührung bei 400rpm 1,5g (1,33 mL) Calfax 16L-35 als Emulgator in 185g destilliertem Wasser gelöst. Anschließend wurden 0,596g (0,562 mL) Benzylmercaptan, 5,36 g (6,7 mL) Acrylnitril und 1,42g (1,4 mL) Methoxyethylacrylat zugegeben und mit N2 über 15 min inertisiert. Die Temperatur wurde auf 70°C erhöht. Nach Erreichen der Temperatur wurden 0,065g Ammoniumpersulfat (APS) zugegeben. Über zwei Pumpkreisläufe, gesteuert über zwei Waagen, werden einerseits 0,397g (0,375 mL) Benzylmercaptan, 48,5g Acrylnitril und 12,9g Methoxyethylacrylat und andererseits 0,055g APS in 15g Wasser gleichzeitig über 4h zudosiert. Anschließend wird noch 30 Minuten bei 70°C gehalten. Die entstandene Polymerdispersion wird abgekühlt und das Polymer in 0,1%iger Aluminiumsulfat-Lösung gefällt, extensiv mit Wasser und Ethanol gewaschen und im Vakuum bei 50°C getrocknet.

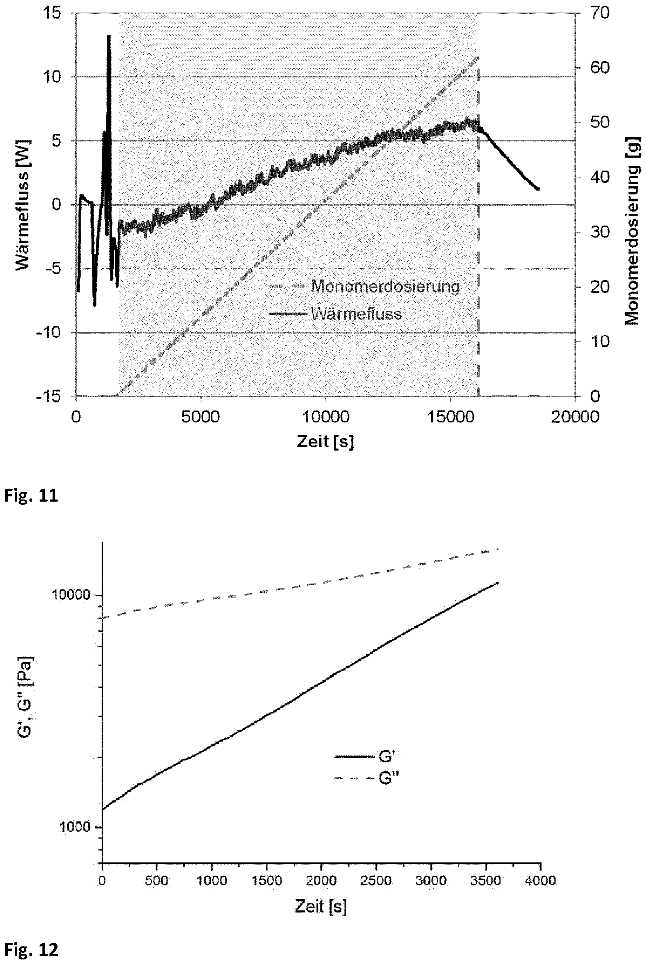

Das Polymer hatte eine relative Viskosität von 1,73. Der vom RCle aufgezeichnete Wärmefluss hatte den in Figur 11 gezeigten Verlauf, der charakteristisch für eine Anreicherung von Monomer über die Dosierzeit und eine dadurch verursachte Erhöhung der Reaktionsgeschwindigkeit über die Zeit ist.

Die Zusammensetzung des Copolymers wurde zu 9,9mol% Methoxyethylacrylat und 90,1mol% Acrylnitril bestimmt. Die Schmelztemperatur des Copolymers betrug 208°C. Die Nullscherviskosität bei 235°C betrug 950 Pas. Der Schnittpunkt von G' und G" bei 235°C wird innerhalb von 60 Minuten nicht erreicht, wie Figur 12 zeigt.

Das Polymer wurde bei einer Temperatur von 220°C mit einer Abzugsgeschwindigkeit von 400m/min gesponnen. Es wurde ein Monofilament mit einem Titer von 9,6tex erzeugt. Der Modul des Monofilaments betrug 424,2 cN/tex, die Festigkeit 9,4 cN/tex und die Bruchdehnung 28,6%.

### Ausführungsbeispiel 4 (erfindungsgemäß)

In einem automatischen Reaktionskalorimeter RCle von Mettler Toledo, ausgerüstet mit einem 500ml-Doppelmantelreaktor mit Rückflusskühlung und Propellerrührer wurden unter Rührung bei 400rpm 1,5g (1,33 mL) Calfax 16L-35 als Emulgator in 185g destilliertem Wasser gelöst. Anschließend wurden 0,645g (0,609 mL) Benzylmercaptan, 5,36 g (6,7 mL) Acrylnitril und 1,42g (1,4 mL) Methoxyethylacrylat zugegeben und mit N2 über 15 min inertisiert. Die Temperatur wurde auf 70°C erhöht. Nach Erreichen der Temperatur wurden 0,065g Ammoniumpersulfat (APS) zugegeben. Über zwei Pumpkreisläufe, gesteuert über zwei Waagen, werden einerseits 0,347g (0,328 mL) Benzylmercaptan, 48,5g Acrylnitril und 12,9g Methoxyethylacrylat und andererseits 0,055g APS in 15g Wasser gleichzeitig über 4h zudosiert. Anschließend wird noch 30 Minuten bei 70°C gehalten. Die entstandene Polymerdispersion wird abgekühlt und das Polymer in 0,1%iger Aluminiumsulfat-Lösung gefällt, extensiv mit Wasser und Ethanol gewaschen und im Vakuum bei 50°C getrocknet.

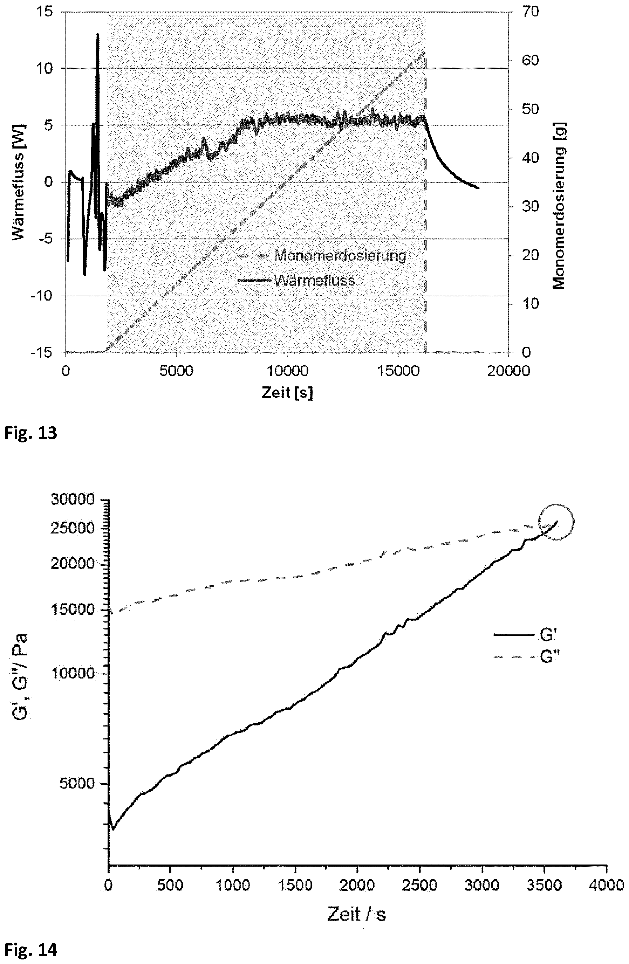

Das Polymer hatte eine relative Viskosität von 1,82. Der vom RCle aufgezeichnete Wärmefluss hatte den in Figur 13 gezeigten Verlauf, der charakteristisch für eine Anreicherung von Monomer über die Dosierzeit und eine dadurch verursachte Erhöhung der Reaktionsgeschwindigkeit über die Zeit ist.

Die Zusammensetzung des Copolymers wurde zu 9,5mol% Methoxyethylacrylat und 90,5mol% Acrylnitril bestimmt. Die Schmelztemperatur des Copolymers betrug 212°C. Die Nullscherviskosität bei 235°C betrug 2376 Pas. Der Schnittpunkt von G' und G" bei 235°C wird nach 60 Minuten erreicht, wie Figur 14 zeigt.

### Ausführungsbeispiel 5 (erfindungsgemäß)

In einem automatischen Reaktionskalorimeter RCle von Mettler Toledo, ausgerüstet mit einem 500ml-Doppelmantelreaktor mit Rückflusskühlung und Propellerrührer wurden unter Rührung bei 400rpm 1,5g (1,33 mL) Calfax 16L-35 als Emulgator in 185g destilliertem Wasser gelöst. Anschließend wurden 0,742g (0,70 mL) Benzylmercaptan, 5,36 g (6,7 mL) Acrylnitril und 1,42g (1,4 mL) Methoxyethylacrylat zugegeben und mit N2 über 15 min inertisiert. Die Temperatur wurde auf 70°C erhöht. Nach Erreichen der Temperatur wurden 0,065g Ammoniumpersulfat (APS) zugegeben. Über zwei Pumpkreisläufe, gesteuert über zwei Waagen, werden einerseits 0,251g (0,237 mL) Benzylmercaptan, 48,5g Acrylnitril und 12,9g Methoxyethylacrylat und andererseits 0,055g APS in 15g Wasser gleichzeitig über 4h zudosiert. Anschließend wird noch 30 Minuten bei 70°C gehalten. Die entstandene Polymerdispersion wird abgekühlt und das Polymer in 0,1%iger Aluminiumsulfat-Lösung gefällt, extensiv mit Wasser und Ethanol gewaschen und im Vakuum bei 50°C getrocknet.

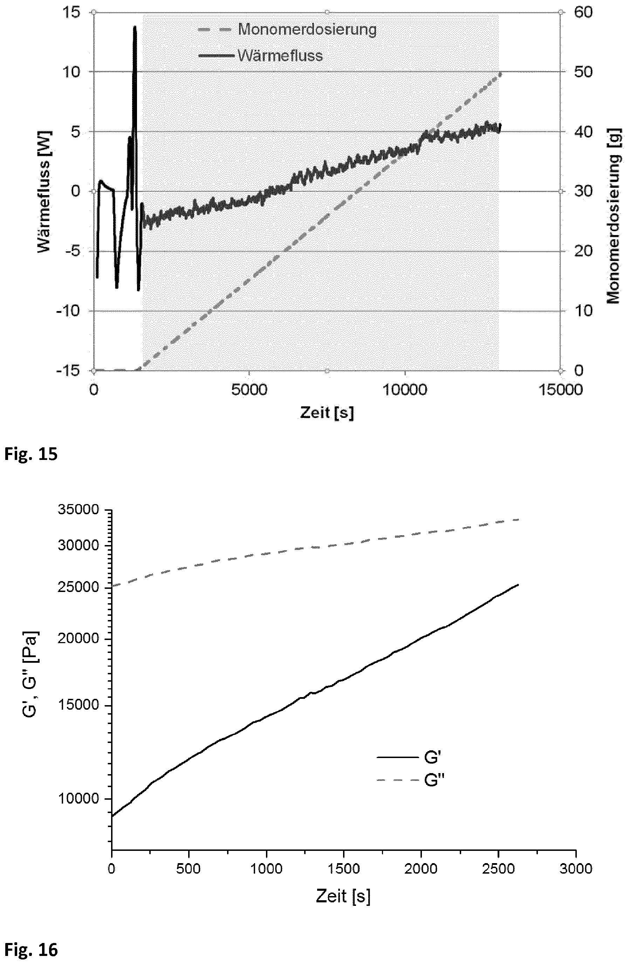

Das Polymer hatte eine relative Viskosität von 1,96. Der vom RCle aufgezeichnete Wärmefluss hatte den in Figur 15 gezeigten Verlauf, der charakteristisch für eine Anreicherung von Monomer über die Dosierzeit und eine dadurch verursachte Erhöhung der Reaktionsgeschwindigkeit über die Zeit ist.

Die Zusammensetzung des Copolymers wurde zu 10,2mol% Methoxyethylacrylat und 89,8mol% Acrylnitril bestimmt. Die Schmelztemperatur des Copolymers betrug 215°C. Die Nullscherviskosität bei 235°C betrug 3783 Pas. Der Schnittpunkt von G' und G" bei 235°C wird innerhalb von 60 Minuten nicht erreicht, wie Figur 16 zeigt.

Das Polymer wurde bei einer Temperatur von 240°C mit einer Abzugsgeschwindigkeit von 200m/min gesponnen. Es wurde ein Monofilament mit einem Titer von 18,8tex erzeugt. Der Modul des Monofilaments betrug 346 cN/tex, die Festigkeit 9,2 cN/tex und die Bruchdehnung 35,0%.

Die durchgeführten Versuchsreihen zeigen, dass - bezogen auf den Prozess der Emulsionspolymerisation - die kontrollierte Abweichung vom starved-feed-Prozess im Vergleich sowohl zu einem starved-feed-Prozess als auch zu einem Prozess mit zu schneller Monomerdosierung (Peak im Wärmefluss) zu verbesserten Eigenschaften des resultierenden Polymers führt. Allerdings ist die Ursache für dieses Verhalten weitgehend unklar und einzig auf die besondere Verfahrensführung zurückzuführen.

## Patentansprüche

1. Verfahren zur Herstellung von PAN-Copolymeren durch radikalische Copolymerisation mindestens eines Acrylnitril-Monomers und mindestens eines radikalisch polymerisierbaren Comonomeren,
bei dem
ein initiales Gemisch enthaltend mindestens ein Acrylnitril-Monomeres und mindestens ein radikalisch polymerisierbares Comonomeres vorgelegt wird,
eine radikalische Polymerisationsreaktion initiiert wird,
wobei vor, während und/oder nach Initiierung ein Gemisch enthaltend das mindestens eine Acrylnitril-Monomer und das mindestens eine radikalisch polymerisierbare Comonomeren dem initialen Gemisch so zudosiert wird, dass
die Reaktionsgeschwindigkeit der radikalen Polymerisationsreaktion und/oder
der bei der radikalischen Polymerisation freigesetzte Wärmefluss über den gesamten Zeitraum der Zudosierung zumindest zeitweise stetig zunehmend, niemals jedoch fallend ist.

2. Verfahren nach Anspruch 1, bei dem
die Reaktionsgeschwindigkeit der radikalen Polymerisationsreaktion und/oder
der bei der radikalischen Polymerisation freigesetzte Wärmefluss über den gesamten Zeitraum der Zudosierung stetig zunehmend ist oder
zumindest oder genau über einen ersten Teil des Zeitraums der Zudosierung stetig zunehmend ist und in zumindest oder genau einem weiteren Teil konstant gehalten wird, wobei bevorzugt der erste Teil des Zeitraums mindestens 30 %, bevorzugt mindestens 40 % bis 95 %, besonders bevorzugt 50 % bis 90 % des gesamten Zeitraums der Zudosierung ausmacht.

3. Verfahren nach einem der vorhergehenden Ansprüche, **dadurch gekennzeichnet, dass** das initiale Gemisch und/oder das zudosierte Gemisch
a) als Acrylnitril-Monomere Acrylnitril, Methacrylnitril oder Mischungen hiervon und/oder
b) das mindestens eine radikalisch polymerisierbare Comonomere mindestens ein Alkoxyalkylacrylat, Alkylacrylat, Vinylester Styrol, substituierte Styrole wie Methylstyrol, Acrylamid, N-substituierte Acrylamide, *N,N*-ringförmig substituierte Acrylamide, N-substituierte *N*-Vinylamide, *N,N*-ringförmig substituierte N-Vinylamide, säurehaltige Monomere wie Acrylsäure, Methacrylsäure, Vinylsulfonsäure, Itaconsäure, ionische Monomere wie Natriumvinylsulfonat, Natriumstyrolsulfonat, Natriumacrylat, Natriummethacrylat oder Mischungen aus mindestens zwei der zuvor genannten Verbindungen enthält oder bezüglich des mindestens einen Acrylnitril-Monomeren und des mindestens einen radikalisch polymerisierbaren Comonomeren hieraus besteht.

4. Verfahren nach einem der vorhergehenden Ansprüche, **dadurch gekennzeichnet, dass** das initiale Gemisch und/oder das zudosierte Gemisch
a) als Acrylnitril-Monomer 95 bis 80 mol-% Acrylnitril sowie
b) als das mindestens eine Comonomer
i) 5 bis 20 mol-% mindestens eines Alkoxyalkylacrylats der allgemeinen Formel I 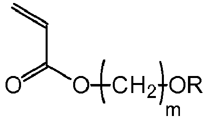 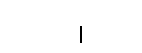 mit R = CₙH₂ₙ₊₁ und n = 1-8 und m = 1-8, insbesondere n=1-4 und m=1-4,
ii) 0 bis 10 mol-% mindestens eines Alkylacrylats der allgemeinen 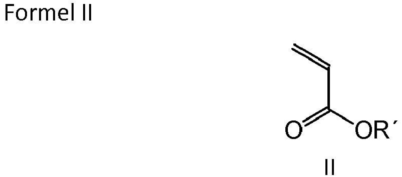 mit R' = CₙH₂ₙ₊₁ und n = 1-18, und
iii) 0 bis 10 mol-% mindestens eines Vinylesters der allgemeinen 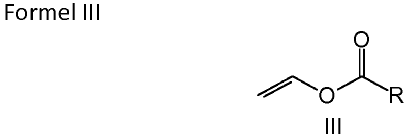 mit R = CₙH₂ₙ₊₁ und n = 1-18
bezogen auf die Gesamtheit aus Acrylnitril-Monomeren und Copolymeren enthält oder bezüglich des mindestens einen Acrylnitril-Monomeren und des mindestens einen radikalisch polymerisierbaren Comonomeren hieraus besteht.

5. Verfahren nach einem der vorhergehenden Ansprüche, **dadurch gekennzeichnet, dass** das initiale Gemisch und/oder das zudosierte Gemisch mindestens ein Lösungsmittel enthält, in dem sich das mindestens eine Acrylnitril-Monomer und das mindestens eine Comonomer lösen oder dispergieren lassen, wobei
das Lösungsmittel bevorzugt ausgewählt ist aus der Gruppe bestehend aus Wasser, Alkoholen oder Mischungen hiervon und/oder
der Gehalt des Lösungsmittels im initialen Gemisch von 80 bis 99,9 Gew.-%, bevorzugt von 90 bis 98 Gew.-% beträgt.

6. Verfahren nach einem der vorhergehenden Ansprüche, **dadurch gekennzeichnet, dass** das initiale Gemisch und/oder das zudosierte Gemisch mindestens einen Emulgator, enthält, wobei der mindestens eine Emulgator bevorzugt
ausgewählt ist aus der Gruppe bestehend aus Alkylsulfonaten, Alkylsulfaten, Aralkylsulfonaten, Aralkylcarboxylaten, Acrylsulfonaten, Fettsäure-Seifen, Harzseifen und/oder
in Mengen von 0,001 bis 5 Gew.-%, bevorzugt 0,01 bis 2,5 Gew.-%, besonders bevorzugt 0,1 bis 1 Gew.-%, jeweils bezogen auf das initielle Gemisch bzw. das zudosierte Gemisch enthalten ist.

7. Verfahren nach einem der vorhergehenden Ansprüche **dadurch gekennzeichnet, dass** das initiale Gemisch und/oder das zudosierte Gemisch mindestens eine Ketten übertragende Substanz enthält wobei bevorzugt die mindestens eine Ketten übertragende Substanz ausgewählt ist aus der Gruppe bestehend aus Mercaptanen,
insbesodere Benzylmercaptan, monofunktionelle Alkylmercaptane, multifunktionelle Alkylmercaptane, andere organische Schwefelverbindungen wie Disulfide sowie Mischungen oder Kombinationen hiervon und/oder
in Mengen von 0,001 bis 2 Gew.-%, bevorzugt 0,01 bis 1 Gew.-%, besonders bevorzugt 0,05 bis 0,5 Gew.-%, jeweils bezogen auf das initiale Gemisch bzw. das zudosierte Gemisch enthalten ist.

8. Verfahren nach einem der vorhergehenden Ansprüche, **dadurch gekennzeichnet, dass** die Polymerisationsreaktion chemisch, thermisch oder mittels Bestrahlung initiiert wird, insbesondere chemisch durch Zugabe eines Radikalstarters zum initialen Gemisch und/oder zum zudosierten Gemisch.

9. Verfahren nach einem der vorhergehenden Ansprüche, **dadurch gekennzeichnet, dass** das zudosierte Gemisch getrennt zum initialen Gemisch zudosiert wird, wobei
ein erster Teil des zudosierten Gemischs das mindestens eine Acrylnitril-Monomer, das mindestens eine Comonomer und mindestens eine Ketten übertragende Substanz enthält oder hieraus besteht und
ein zweiter Teil mindestens ein Lösungsmittel und mindestens einen Radikalstarter enthält oder hieraus besteht.

10. Verfahren nach einem der vorhergehenden Ansprüche, **dadurch gekennzeichnet, dass** die radikalische Polymerisation als Emulsionspolymerisation durchgeführt wird.

11. Polyacrylnitril-Copolymer, herstellbar nach einem Verfahren nach einem der vorhergehenden Ansprüche.

12. Polyacrylnitril-Copolymer nach vorhergehendem Anspruch, **gekennzeichnet durch** einen Sol-Gel-Übergang, gemessen durch einen im rheologischen Oszillationsexperiment mit einer Platte-Platte-Konfiguration (Durchmesser 20mm, Spalt 0,5mm) bei einer Schubspannungsamplitude von 200Pa bei einer Frequenz von 1,6 Hz und einer Temperatur von 235°C bestimmten Schnittpunkt der zeitlichen Verläufe des Speichermoduls G' und des Verlustmoduls G"
der zumindest 30 % größer ist, verglichen mit einem identischen Polyacrylnitril-Copolymer, hergestellt nach einem starved-feed-Verfahren, und/oder
nach mindestens 1200 s, bevorzugt mindestens 1500 s, weiter bevorzugt mindestens 2000 s, insbesondere mindestens 3000 s.

13. Formkörper, erhältlich aus einem Polyacrylnitril-Copolymeren nach einem der beiden vorhergehenden Ansprüche, insbesondere in Form eines Mono- oder Multifilamentes.

14. Verfahren zur Herstellung eines Formkörpers nach vorhergehendem Anspruch aus einem Polyacrylnitril-Copolymeren nach einem der Ansprüche 11 bis 12, bei dem das Polyacrylnitril-Copolymere einem formgebenden Prozess unterzogen wird, insbesondere bei dem das Polyacrylnitril-Copolymere schmelzgesponnen und dadurch ein Mono- oder Multifilament hergestellt wird.

## Claims

1. Method for the production of PAN copolymers by radical copolymerisation of at least one acrylonitrile monomer and at least one radically polymerisable comonomer,
in which
an initial mixture comprising at least one acrylonitrile monomer and at least one radically polymerisable comonomer is provided,
a radical polymerisation reaction is initiated,
wherein, before, during and/or after initiation, a mixture comprising the at least one acrylonitrile monomer and the at least one radically polymerisable comonomer are added to the initial mixture so that
the reaction speed of the radical polymerisation reaction
and/or
the heat flow released during the radical polymerisation
is continuously increasing at least at times over the entire period of time of the addition, however is never decreasing.

2. Method according to claim 1, in which
the reaction speed of the radical polymerisation reaction
and/or
the heat flow released during the radical polymerisation
is continuously increasing over the entire period of time of the addition
or
is continuously increasing, at least or precisely over a first part of the period of time of the addition and is kept constant in at least or precisely a further part, wherein preferably the first part of the period of time constituting at least 30%, preferably at least 40% to 95%, particularly preferably 50% to 90%, of the total period of time of the addition.

3. Method according to one of the preceding claims, **characterised in that** the initial mixture and/or the added mixture comprises
a) as acrylonitrile monomer, acrylonitrile, methacrylonitrile or mixtures hereof and/or
b) the at least one radically polymerisable comonomer, at least one alkoxy alkyl acrylate, alkyl acrylate, vinyl ester, styrene, substituted styrenes, such as methyl styrene, acrylamide, N-substituted acrylamides, *N,N-*annularly substituted acrylamides, N-substituted *N*-vinyl amides, *N,N*-annularly substituted *N*-vinyl amides, acid-containing monomers, such as acrylic acid, methacrylic acid, vinyl sulfonic acid, itaconic acid, ionic monomers, such as sodium vinyl sulfonate, sodium styrene sulfonate, sodium acrylate, sodium methacrylate or mixtures of at least two of the above-mentioned compounds or, with respect to the at least one acrylonitrile monomer and to the at least one radically polymerisable comonomer, consists hereof.

4. Method according to one of the preceding claims, **characterised in that** the initial mixture and/or the added mixture comprises
a) as acrylonitrile monomer, 95 to 80% by mol of acrylonitrile and also
b) as the at least one comonomer
i) 5 to 20% by mol of at least one alkoxy alkyl acrylate of the general formula I 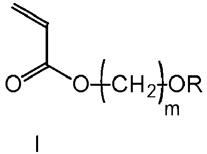 with R = CₙH₂ₙ₊₁ and n = 1 - 8 and m = 1 - 8, in particular n = 1 - 4 and m = 1 - 4,
ii) 0 to 10% by mol of at least one alkyl acrylate of the general formula II 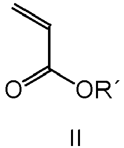 with R' = CₙH₂ₙ₊₁ and n = 1 - 18, and
iii) 0 to 10% by mol of at least one vinyl ester of the general formula III 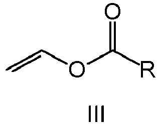 with R = CₙH₂ₙ₊₁ and n = 1 ― 18 relative to the totality of acrylonitrile monomers and copolymers or, with respect to the at least one acrylonitrile monomer and to the at least one radically polymerisable comonomer, consists hereof.

5. Method according to one of the preceding claims, **characterised in that** the initial mixture and/or the added mixture comprises at least one solvent in which the at least one acrylonitrile monomer and the at least one comonomer can be dissolved or dispersed,
the solvents being selected preferably from the group consisting of water, alcohols or mixtures hereof, and/or
the content of the solvent in the initial mixture being from 80 to 99.9% by weight, preferably from 90 to 98% by weight.

6. Method according to one of the preceding claims, **characterised in that** the initial mixture and/or the added mixture comprises at least one emulsifier, the at least one emulsifier preferably
being selected from the group consisting of alkyl sulfonates, alkyl sulfates, aralkyl sulfonates, aralkyl carboxylates, acrylosulfonates, fatty acid soaps, resin soaps and/or
being contained in quantities of 0.001 to 5% by weight, preferably 0.01 to 2.5% by weight, particularly preferably 0.1 to 1% by weight, respectively relative to the initial mixture or the metered-in mixture.

7. Method according to one of the preceding claims, **characterised in that** the initial mixture and/or the metered-in mixture comprises at least one chain-transferring substance, preferably the at least one chain-transferring substance
being selected from the group consisting of mercaptans, in particular benzyl mercaptan, monofunctional alkyl mercaptans, multifunctional alkyl mercaptans, other organic sulfur compounds such as disulfides and also mixtures or combinations hereof and/or
being contained in quantities of 0.001 to 2% by weight, preferably 0.01 to 1% by weight, particularly preferably 0.05 to 0.5% by weight, respectively relative to the initial mixture or the added mixture.

8. Method according to one of the preceding claims, **characterised in that** the polymerisation reaction is initiated chemically, thermally or by means of irradiation, in particular chemically by the addition of a radical starter to the initial mixture and/or to the added mixture.

9. Method according to one of the preceding claims, **characterised in that** the added mixture is added separately into the initial mixture,
a first part of the metered-in mixture comprising the at least one acrylonitrile monomer which comprises at least one comonomer and at least one chain-transferring substance or consists hereof, and
a second part comprising at least one solvent and at least one radical starter or consisting hereof.

10. Method according to one of the preceding claims, **characterised in that** the radical polymerisation is implemented as emulsion polymerisation.

11. Polyacrylonitrile copolymer, producible according to a method according to one of the preceding claims.

12. Polyacrylonitrile copolymer according to the preceding claim, **characterised by** a sol-gel transition, measured by means of an intersection point of the temporal courses of the storage modulus G' and of the loss modulus G" determined in the rheological oscillation experiment with a plate-plate configuration (diameter 20 mm, gap 0.5 mm) with a shear stress amplitude of 200 Pa, at a frequency of 1.6 Hz and a temperature of 235°C,
which is at least 30% greater, compared to an identical polyacrylonitrile copolymer, produced according to a starved-feed method and/or
after at least 1,200 s, preferably at least 1,500 s, further preferably at least 2,000 s, in particular at least 3,000 s.

13. Moulded article, obtainable from a polyacrylonitrile copolymer according to one of the two preceding claims, in particular in the form of a mono- or multifilament.

14. Method for the production of a moulded article according to the preceding claim from a polyacrylonitrile copolymer according to one of the claims 11 to 12, in which the polyacrylonitrile copolymer is subjected to a shaping process, in particular in which the polyacrylonitrile copolymer is melt-spun and consequently a mono- or multifilament is produced.

## Revendications

1. Procédé pour produire des copolymères de PAN par copolymérisation radicalaire d'au moins un monomère acrylonitrile et d'au moins un comonomère pouvant être polymérisé de façon radicalaire,
selon lequel
un mélange initial contenant au moins un monomère acrylonitrile et au moins un comonomère pouvant être polymérisé de façon radicalaire est fourni,
une réaction de polymérisation radicalaire est initiée,
dans lequel avant, pendant et/ou après l'initiation, un mélange contenant le au moins un monomère acrylonitrile et le au moins un comonomère pouvant être polymérisé de façon radicalaire est ajouté au mélange initial, de sorte que
la vitesse de réaction de la réaction de polymérisation radicalaire et/ou
le flux de chaleur libéré lors de la polymérisation radicalaire augmentent de manière continue au moins par moments pendant toute la période de l'ajout, mais ne diminuent jamais.

2. Procédé selon la revendication 1, selon lequel
la vitesse de réaction de la réaction de polymérisation radicalaire et/ou
le flux de chaleur libéré lors de la polymérisation radicalaire augmentent de manière continue pendant toute la période de l'ajout ou
augmentent de manière continue au moins ou précisément pendant une première partie de la période de l'ajout et sont maintenus constants dans au moins ou précisément une autre partie, dans lequel de préférence la première partie de la période représente au moins 30 %, de préférence au moins 40 % à 95 %, de manière particulièrement préférée 50 % à 90 % de toute la période de l'ajout.

3. Procédé selon l'une quelconque des revendications précédentes, **caractérisé en ce que** le mélange initial et/ou le mélange ajouté
a) contient comme monomères acrylonitrile l'acrylonitrile, le méthacrylonitrile ou des mélanges de ceux-ci et/ou
b) le au moins un comonomère pouvant être polymérisé de façon radicalaire contient au moins un acrylate d'alcoxyalkyle, acrylate d'alkyle, styrène d'ester vinylique, des styrènes substitués tels que le méthylstyrène, l'acrylamide, les acrylamides N-substitués, les acrylamides *N,N*-substitués annulairement, les N-vinylamides N-substitués, les *N*-vinylamides *N,N*-substitués annulairement, les monomères acides tels que l'acide acrylique, l'acide méthacrylique, l'acide vinylsulfonique, l'acide itaconique, les monomères ioniques tels que le vinylsulfonate de sodium, le styrène sulfonate de sodium, l'acrylate de sodium, le méthacrylate de sodium ou des mélanges d'au moins deux des composés précédemment cités ou en ce qui concerne le au moins un monomère acrylonitrile et le au moins un comonomère pouvant être polymérisé de façon radicalaire en est constitué.

4. Procédé selon l'une quelconque des revendications précédentes, **caractérisé en ce que** le mélange initial et/ou le mélange ajouté
a) contient comme monomère acrylonitrile 95 à 80 % en moles d'acrylonitrile ainsi que
b) en tant que le au moins un comonomère
i) 5 à 20 % en moles d'au moins un acrylate d'alcoaxyle de formule générale I 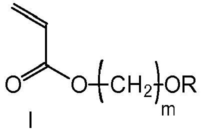 avec R = CₙH₂ₙ₊ᵢ et n = 1-8 et m = 1-8, en particulier n=1-4 et m=1-4,
ii) 0 à 10 % en moles d'au moins un acrylate d'alkyle de formule 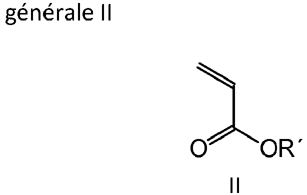 avec R' = CₙH₂ₙ₊₁ et n = 1-18, et
iii) 0 à 10 % en moles d'au moins un ester vinylique de formule 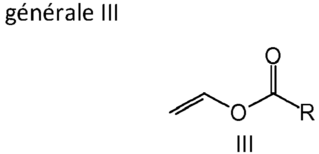
avec R = CₙH₂ₙ₊₁ et n = 1-18
rapporté à la totalité de monomères acrylonitrile et de copolymères ou en ce qui concerne le au moins un monomère acrylonitrile et le au moins un comonomère pouvant être polymérisé de façon radicalaire en est constitué.

5. Procédé selon l'une quelconque des revendications précédentes, **caractérisé en ce que** le mélange initial et/ou le mélange ajouté contient au moins un solvant, dans lequel le au moins un monomère acrylonitrile et le au moins un comonomère peuvent être dissous ou dispersés, dans lequel
le solvant est choisi de préférence dans le groupe constitué par l'eau, les alcools ou des mélanges de ceux-ci et/ou
la teneur du solvant dans le mélange initial atteint de 80 à 99,9 % en poids, de préférence de 90 à 98 % en poids.

6. Procédé selon l'une quelconque des revendications précédentes, **caractérisé en ce que** le mélange initial et/ou le mélange ajouté contient au moins un émulsifiant, dans lequel le au moins un émulsifiant est de préférence choisi
dans le groupe constitué par les alkylsulfonates, alkylsulfates, aralkylsulfonates, aralkylcarboxylates, acrylsulfonates, savons aux acides gras, savons résineux et/ou
est contenu dans des quantités de 0,001 à 5 % en poids, de préférence 0,01 à 2,5 % en poids, de manière particulièrement préférée 0,1 à 1 % en poids, respectivement rapporté au mélange initial ou au mélange ajouté.

7. Procédé selon l'une quelconque des revendications précédentes, **caractérisé en ce que** le mélange initial et/ou le mélange ajouté contient au moins une substance transférant des chaînes, dans lequel de préférence la au moins une substance transférant des chaînes
est choisie dans le groupe constitué par les mercaptans, en particulier le benzylmercaptan, les alkylmercaptans monofonctionels, les alkylmercaptans multifonctionnels, d'autres composés sulfurés organiques tels que des disulfures ainsi que des mélanges ou combinaisons de ceux-ci et/ou
est contenu dans des quantités de 0,001 à 2 % en poids, de préférence 0,01 à 1 % en poids, de manière particulièrement préférée 0,05 à 0,5 % en poids, respectivement rapporté au mélange initial ou au mélange ajouté.

8. Procédé selon l'une quelconque des revendications précédentes, **caractérisé en ce que** la réaction de polymérisation est initiée de manière chimique, thermique ou au moyen d'une irradiation, en particulier de manière chimique par ajout d'un initiateur radicalaire au mélange initial et/ou au mélange ajouté.

9. Procédé selon l'une quelconque des revendications précédentes, **caractérisé en ce que** le mélange ajouté est ajouté séparément du mélange initial, dans lequel
une première partie du mélange ajouté contient le au moins un monomère acrylonitrile, le au moins un comonomère et au moins une substance transférant des chaînes ou en est constituée et
une deuxième partie contient au moins un solvant et au moins un initiateur radicalaire ou en est constituée.

10. Procédé selon l'une quelconque des revendications précédentes, **caractérisé en ce que** la polymérisation radicalaire est réalisée en tant que polymérisation en émulsion.

11. Copolymère de polyacrylonitrile, pouvant être produit suivant un procédé selon l'une quelconque des revendications précédentes.

12. Copolymère de polyacrylonitrile selon la revendication précédente, **caractérisé par** une transition sol-gel, mesurée par un point d'intersection défini des variations temporelles du module de conservation G' et du module de perte G" dans l'expérience d'oscillation rhéologique avec une configuration plaque-plaque (diamètre 20 mm, fente 0,5 mm) pour une amplitude de contrainte de cisaillement de 200 Pa à une fréquence de 1,6 Hz et une température de 235 °C
qui est supérieure d'au moins 30 %, comparée à un copolymère de polyacrylonitrile identique, produit selon un procédé en conditions affamées, et/ou
après au moins 1200 s, de préférence au moins 1500 s, plus préférablement au moins 2000 s, en particulier au moins 3000 s.

13. Corps moulé, pouvant être obtenu à partir de copolymères de polyacrylonitrile selon l'une des deux revendications précédentes, en particulier sous forme d'un monofilament ou multifilament.

14. Procédé pour produire un corps moulé selon la revendication précédente à partir d'un copolymère de polyacrylonitrile selon l'une quelconque des revendications 11 à 12, selon lequel le copolymère de polyacrylonitrile est soumis à un processus de façonnage, en particulier selon lequel le copolymère de polyacrylonitrile est filé à l'état fondu et de ce fait un mono ou multifilament est produit.
